# EUROPEAN PATENT SPECIFICATION

(11) **EP 3 680 268 B1**
(45) Date of publication and mention of the grant of the patent: **13.09.2023**
(21) Application number: 17927085.5
(22) Date of filing: 29.09.2017
(51) Int. Cl.: C08G 59/06, C08G 59/24, C08G 59/50

(54) **EPOXY RESIN, EPOXY RESIN COMPOSITION, EPOXY RESIN CURED PRODUCT, AND COMPOSITE MATERIAL**
EPOXIDHARZ, EPOXIDHARZZUSAMMENSETZUNG, GEHÄRTETES EPOXIDHARZPRODUKT UND VERBUNDSTOFFMATERIAL
RÉSINE ÉPOXYDE, COMPOSITION DE RÉSINE ÉPOXYDE, PRODUIT DURCI DE RÉSINE ÉPOXYDE ET MATÉRIAU COMPOSITE

(43) Date of publication of application: 15.07.2020
(73) Proprietor: Resonac Corporation, Tokyo (JP)
(72) Inventor: HIGASHIUCHI, Tomoko, Tokyo 100-6606 (JP); MARUYAMA, Naoki, Tokyo 100-6606 (JP); YOSHIDA, Yuka, Tokyo 100-6606 (JP); FUKUDA, Kazumasa, Tokyo 100-6606 (JP); TAKEZAWA, Yoshitaka, Tokyo 100-6606 (JP)
(74) Representative: Hoffmann Eitle
(86) International application number: PCT/JP2017/035660
(87) International publication number: WO 2019/064546

(56) References cited:
- EP-A1- 3 514 190
- EP-A1- 3 514 191
- EP-A1- 3 597 687
- EP-A1- 3 660 081
- WO-A1-2016/104772
- WO-A1-2016/104772
- WO-A1-2017/066929
- JP-A- 2002 226 550
- JP-A- 2004 010 762
- JP-A- 2010 001 427
- JP-A- 2016 113 540
- US-A1- 2010 080 997
- SZCZEPANIAK, B. et al.: "Curing of liquid crystalline epoxy resins with a biguanide", Journal of Polymer Science : Part A: Polymer Chemistry, vol. 35, no. 13, 1997, pages 2739-2745, XP055589187,
- SZCZEPANIAK, B. et al.: "Liquid crystalline epoxy resins by polyaddition of diglycidyl ether of 4, 4'-dihydroxybiphenyl and difunctional aromatic compounds", Journal of Polymer Science : Part A: Polymer Chemistry, vol. 36, no. 1, 1998, pages 21-29, XP055589193,

## Description

### Technical Field

The invention relates to an epoxy resin, an epoxy resin composition, an epoxy resin cured product, and a composite material.

### Background Art

Epoxy resin, which is known as a highly heat-resistant resin, is used in various applications. Recently, research has been conducted on an epoxy resin that exhibits excellent heat conductivity with a view to an increase in the operation temperature of power devices, and also exhibits excellent fracture toughness.

An epoxy resin including an epoxy compound having a mesogenic structure in the molecule (hereinafter, also referred to as a mesogen-containing epoxy resin) is known as an epoxy resin that exhibits excellent heat conductivity and fracture toughness (see, for example, Patent Document 1). As a mesogen-containing epoxy resin, an epoxy resin obtained by reaction of an epoxy monomer having a mesogenic structure and a divalent phenol compound has been proposed as an epoxy resin that exhibits superior heat resistance, in addition to thermal conductivity and fracture toughness (see, for example, Patent Document 2).

Epoxy resins comprising an epoxy compound, the epoxy compound having two aromatic rings that form a divalent biphenyl structure and mesogenic structures that are bonded to each of the two aromatic rings are disclosed in Patent Document 3.

### Prior Art Documents

### Patent Documents

[Patent Document 1] Japanese Patent Application-Laid Open No. 2014-122337
[Patent Document 2] International Publication No. WO 2016-104772
[Patent Document 3] JP 2004-10762 A

### Summary of the Invention

### Problem to be Solved by the Invention

Although the mesogen-containing epoxy resin exhibits excellent fracture toughness as compared with other epoxy resins, further improvement in mechanical properties is desired in view of increasing the range of application of epoxy resin, and bending elastic modulus is one of such properties.

In view of the foregoing, the invention aims to provide an epoxy resin and an epoxy resin composition that exhibit excellent fracture toughness and bending elastic modulus, and also an epoxy resin cured product and a composite material obtained by using the same.

### Means for Solving the Problem

The present invention relates to an epoxy resin, comprising an epoxy compound, the epoxy compound having two aromatic rings that form a divalent biphenyl structure and mesogenic structures that are bonded to each of the two aromatic rings, and at least one of bonding sites of the aromatic ring to the mesogenic structure being at an ortho position or a meta position with respect to a carbon atom that bonds the aromatic rings.

In addition, the present invention relates to an epoxy resin composition comprising the epoxy resin, an epoxy resin cured product comprising a cured product of the epoxy resin composition, and a reinforcing material comprising the epoxy resin cured product. Further embodiments of the present invention are described below in the appended claims.

### Effects of the Invention

According to the invention, an epoxy resin and an epoxy resin composition that exhibit excellent fracture toughness and bending elastic modulus, and also an epoxy resin cured product and a composite material obtained by using the same, are provided.

### Embodiments for Implementing the Invention

In the following, embodiments for implementing the invention are explained. However, the invention is not limited to the embodiments. The elements of the embodiments (including steps) are not essential, unless otherwise stated. Further, numbers and numerical ranges do not limit the invention.

In the disclosure, the "process" refers not only to a process that is independent from the other steps, but also to a step that cannot be clearly distinguished from the other steps, as long as the aim of the process is achieved.

In the disclosure, the numerical range represented by "A to B" includes A and B as a minimum value and a maximum value, respectively.

In the disclosure, when numerical ranges are described in a stepwise manner, the values of the upper or lower limit of each numerical range may be substituted by the values of the upper or lower limit of the other numerical range, or may be substituted by the values described in the Examples.

In the disclosure, when there are more than one kind of substance corresponding to a component of a composition, the content of the component refers to a total content of the substances, unless otherwise stated.

In the disclosure, when there are more than one kind of particles corresponding to a component of a composition, the particle size of the component refers to a particle size of a mixture of the more than one kind of particles.

In the disclosure, the epoxy compound refers to a compound having an epoxy group in its molecule. The epoxy resin refers to a collective concept of epoxy compounds that are not in a cured state.

### <Epoxy resin (present invention)>

The epoxy resin of the present invention is an epoxy resin that includes an epoxy compound having two aromatic rings that form a divalent biphenyl structure and mesogenic structures that are bonded to each of the two aromatic rings, and at least one of bonding sites of the aromatic ring to the mesogenic structure is at an ortho position or a meta position with respect to a carbon atom that bonds the aromatic rings (hereinafter, the epoxy compound is also referred to as specific epoxy compound 1).

In the disclosure, the configuration of the bonding of the mesogenic structures to the aromatic rings that form the divalent biphenyl structure is not particularly limited. For example, the atom that forms the mesogenic structure may be directly bonded to the aromatic ring, or the atom may be indirectly bonded to the aromatic ring via a linking group.

In the disclosure, the mesogenic structure may include a biphenyl structure. In that case, the biphenyl structure included in the mesogenic structure is not regarded as the biphenyl structure as described above.

The inventors have found that a cured product obtained from an epoxy resin including an epoxy compound as described above exhibits improved bending elastic modulus, as compared with an epoxy resin including an epoxy compound that has a molecular structure in which the mesogenic structures and the divalent biphenyl structure are bonded in a linear manner. The reason for this is not exactly clear, but it is presumably because of the flexed molecular structure of the epoxy compound, formed by the mesogenic structures being bonded at an angle with respect to the molecular axis of the divalent biphenyl structure, which affects the stacking property of the molecule and contributes to the improvement in bending elastic modulus.

### (Divalent biphenyl structure)

Specific examples of the divalent biphenyl structure included in the specific epoxy compound 1 include the structures represented by the following Formulae (BP1) to (BP5). The steric relationship of the two aromatic rings that form the divalent biphenyl structure is not particularly limited, and the aromatic rings may be on the same plane or on different planes.

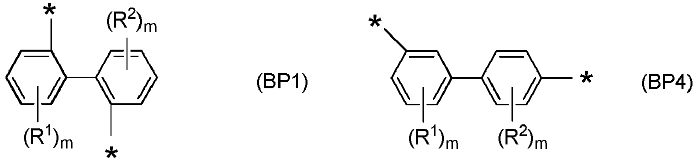

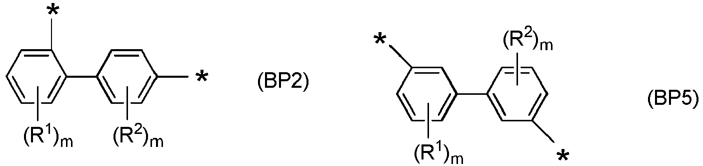

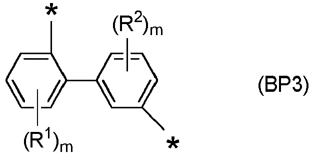

In Formulae (BP1) to (BP5), * refers to a bonding site to an adjacent atom. Each R¹ or R² independently represents an alkyl group having 1 to 8 carbon atoms. Each m represents an integer from 1 to 4.

Each R¹ or R² independently preferably represents an alkyl group having 1 to 3 carbon atoms, more preferably a methyl group.

Each m independently preferably represents an integer from 0 to 2, more preferably 0 or 1, further preferably 0.

From the viewpoint of imparting flexibility to the molecular structure of specific epoxy compound 1, the divalent biphenyl structure is preferably a structure in which both of * are at an ortho position or a meta position with respect to the carbon atom that contributes to the bonding of the aromatic rings (i.e., the structures represented by Formula (BP1), (BP3) or (BP5).

From the viewpoint of imparting flexibility to the molecular structure of the specific epoxy compound 1, the divalent biphenyl structure is preferably a structure in which at least one of * is at an ortho position with respect to the carbon atom that contributes to the bonding of the aromatic rings (i.e., the structures represented by Formula (BP1), (BP2) or (BP3); and more preferably a structure in which both of * are at an ortho position with respect to the carbon atom that contributes to the bonding of the aromatic rings (i.e., the structures represented by Formula (BP1)).

### (Mesogenic structure)

Specific epoxy compound 1 has mesogenic structures that are bonded to each of the aromatic rings that form a divalent biphenyl structure. The mesogenic structures included in a single molecule of specific epoxy compound 1 may be the same or different from each other.

The mesogenic structure refers to a structure of an epoxy compound that is included in an epoxy resin that is capable of exhibiting liquid crystallinity.

Examples of the mesogenic structure of the specific epoxy compound include a biphenyl structure, a phenyl benzoate structure, a cyclohexyl benzoate structure, an azobenzene structure, a stilbene structure, a terphenyl structure, an anthracene structure, derivatives of these structures, and a structure in which two or more of these structures are linked via a linking group.

An epoxy resin including an epoxy compound having a mesogenic structure forms, in a cured product, a higher-order structure. In the disclosure, the higher-order structure refers to a structure in which structural elements are arranged to form a micro-and-organized structure. Examples of the higher-order structure include a crystalline phase and a liquid crystalline phase, and existence thereof can be determined with a polarizing microscope. Specifically, existence of a higher-order structure can be determined by whether or not an interference pattern due to depolarization is observed under crossed Nicols. A higher-order structure generally exists in a cured product of an epoxy resin composition and forms a domain structure in the form of an island, wherein each island corresponds to a higher-order structure. The structural elements of the higher-order structure are generally formed by covalent bonding.

Examples of a higher-order structure formed in a cured product include a nematic structure and a smectic structure, which are a liquid crystal structure, respectively. The nematic structure is a liquid crystal structure that has only an orientational order in which molecules are arranged in one direction. The smectic structure is a liquid crystal structure that has a one-dimensional order in addition to an orientational order, and forms a lamellar structure. The degree of order is higher in a smectic structure than in a nematic structure. Therefore, a smectic structure is preferred in terms of thermal conductivity and fracture toughness of a cured product.

Whether or not a smectic structure is formed in a cured product of the epoxy resin can be determined by X-ray diffraction measurement by using, for example, an X-ray diffractometer from Rigaku Corporation. When the measurement is performed using CuKα1 line under a tube voltage of 40 kV, a tube current of 20 mA and a measurement range 2θ = 2° to 30°, and a diffraction peak is observed in a range of 2θ = 2° to 10°, it is determined that a smectic structure is formed in a cured product.

The mesogenic structure of the specific epoxy compound 1 may be a structure represented by the following Formula (1).

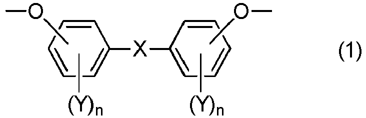

In Formula (1), X represents a single bond or a linking group that includes at least one divalent group selected from the following Group (A). Each Y independently represents an aliphatic hydrocarbon group having 1 to 8 carbon atoms, an alkoxy group having 1 to 8 carbon atoms, a fluorine atom, a chlorine atom, a bromine atom, an iodine atom, a cyano group, a nitro group or an acetyl group; and each n independently represents an integer from 0 to 4.

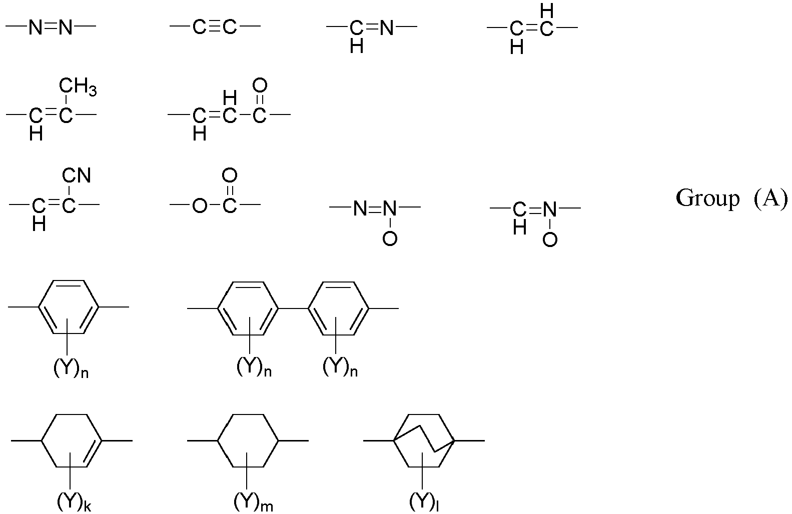

In Group (A), each Y independently represents an aliphatic hydrocarbon group having 1 to 8 carbon atoms, an alkoxy group having 1 to 8 carbon atoms, a fluorine atom, a chlorine atom, a bromine atom, an iodine atom, a cyano group, a nitro group or an acetyl group; each n independently represents an integer from 0 to 4; k represents an integer from 0 to 7; m represents an integer from 0 to 8; and l represents an integer from 0 to 12.

In the mesogenic structure represented by Formula (1), when X is at least one linking group selected from the divalent groups in Group (A), X is preferably at least one linking group selected from the divalent groups included in the following Group (Aa); more preferably a linking group that is selected from the divalent groups included in the following Group (Aa) and has a ring structure.

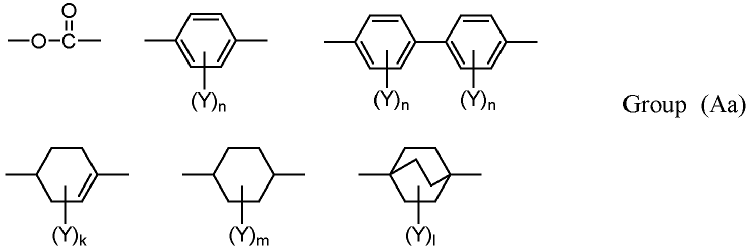

In Group (Aa), each Y independently represents an aliphatic hydrocarbon group having 1 to 8 carbon atoms, an alkoxy group having 1 to 8 carbon atoms, a fluorine atom, a chlorine atom, a bromine atom, an iodine atom, a cyano group, a nitro group or an acetyl group; each n independently represents an integer from 0 to 4; k represents an integer from 0 to 7; m represents an integer from 0 to 8; and l represents an integer from 0 to 12.

The mesogenic structure represented by Formula (1) is preferably a mesogenic structure represented by the following Formula (2).

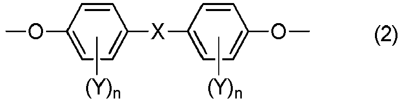

In Formula (2), definitions and preferred examples of X, Y and n are the same as the definitions and preferred examples of X, Y and n in Formula (1).

The specific epoxy compound may be an epoxy compound having a structure represented by the following Formula (1-A).

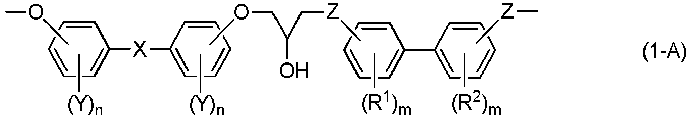

In Formula (1-A), definitions and preferred examples of X, Y and n are the same as the definitions and preferred examples of X, Y and n in Formula (1). Definitions and preferred examples of R¹, R² and m are the same as the definitions and preferred examples of R¹, R² and m in Formulae (BP1) to (BP5). Each Z independently represents -O- or -NH-, and at least one of Z is at an ortho position or a meta position with respect to the carbon atom that contributes to the bonding of the aromatic rings that form a divalent biphenyl structure.

From the viewpoint of imparting flexibility to the molecular structure of specific epoxy compound 1, it is preferred that both of Z are bonded to the aromatic rings that form the divalent biphenyl structure at an ortho position or a meta position with respect to the carbon atoms that contribute to the bonding of the aromatic rings.

From the viewpoint of imparting flexibility to the molecular structure of specific epoxy compound 1, it is preferred that at least one of Z is bonded to the aromatic ring that forms the divalent biphenyl structure at an ortho position with respect to the carbon atom that contributes to the bonding of the aromatic rings; and it is more preferred that both of Z are bonded to the aromatic ring that forms the divalent biphenyl structure at an ortho position with respect to the carbon atom that contributes to the bonding of the aromatic rings, i.e., in a state represented by the following Formula (2-A).

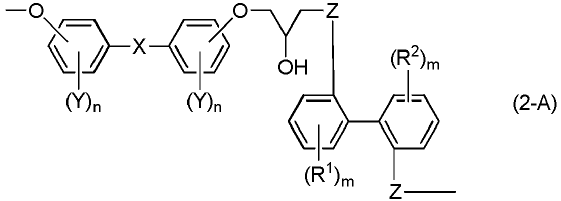

In Formula (2-A), definitions and preferred examples of X, Y, n, R¹, R² and m are the same as the definitions and preferred examples of X, Y, n R¹, R² and m in Formula (1-A).

The mesogenic structure represented by Formula (1) may be a structure represented by the following Formula (3) or Formula (4).

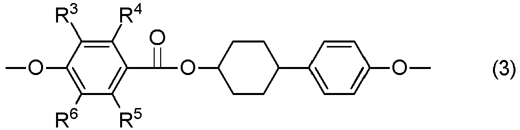

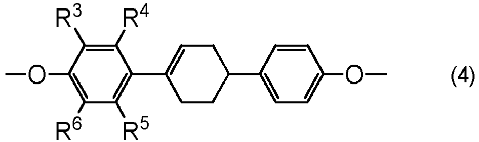

In Formulae (3) and (4), each of R³ to R⁶ independently represents a hydrogen atom or an alkyl group having 1 to 3 carbon atoms.

Each of R³ to R⁶ is preferably independently a hydrogen atom or an alkyl group having 1 or 2 carbon atoms, more preferably a hydrogen atom or a methyl group, further preferably a hydrogen atom. The number of hydrogen atoms represented by R³ to R⁶ is preferably 2 to 4, more preferably 3 or 4, further preferably 4. When any one of R³ to R⁶ is an alkyl group having 1 to 3 carbon atoms, at least one of R³ or R⁶ is preferably an alkyl group having 1 to 3 carbon atoms.

When the mesogenic structure represented by Formula (1) is a mesogenic structure represented by Formula (3) or Formula (4), examples of the epoxy compound having the same include an epoxy compound having a structure represented by at least one selected from the following Formulae (3-A), (3-B), (4-A) and (4-B).

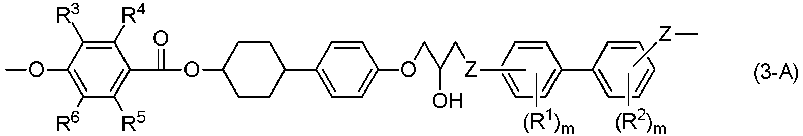

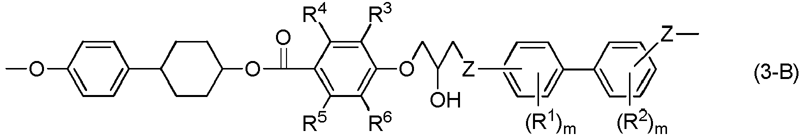

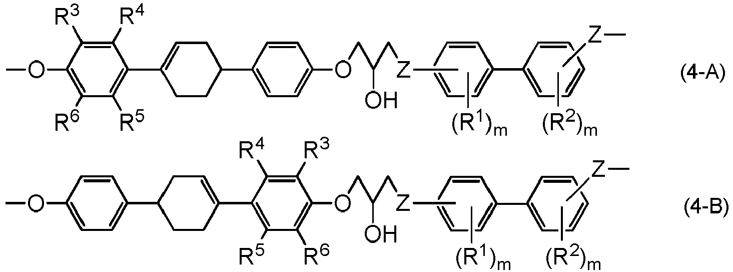

In Formulae (3-A), (3-B), (4-A) and (4-B), definitions and preferred examples of R³ to R⁶ are the same as the definitions and preferred examples of R³ to R⁶ in Formula (3) and Formula (4). The definitions and preferred examples of R¹, R², m and Z are the same as the definitions and preferred examples of R¹, R², m and Z in Formula (1-A).

The number of the mesogenic structures in specific epoxy compound 1 is not particularly limited as long as it is two or more. From the viewpoint of reducing the viscosity, at least a part of specific epoxy compound 1 is preferably a compound having two mesogenic structures (dimer compound).

Examples of specific epoxy compound 1 as a dimer compound include a compound represented by the following Formula (1-A-A).

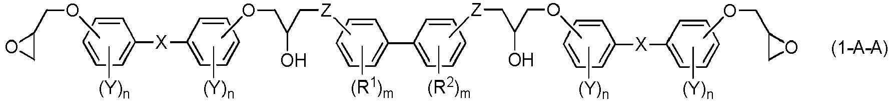

In Formula (1-A-A), definitions and preferred examples of X, Y, n, m, R¹, R² and Z are the same as the definitions and preferred examples of X, Y, n, m, R¹, R² and Z in Formula (1-A).

From the viewpoint of imparting flexibility to the molecular structure of specific epoxy compound 1 represented by the Formula above, it is preferred that at least one of Z is at an ortho position with respect to the carbon atom that contributes to the bonding of the aromatic rings that form the divalent biphenyl group; and it is more preferred that both of Z are at an ortho position with respect to the carbon atom that contributes to the bonding of the aromatic rings that form the divalent biphenyl group (i.e., in a state represented by the following Formula (2-A-A).

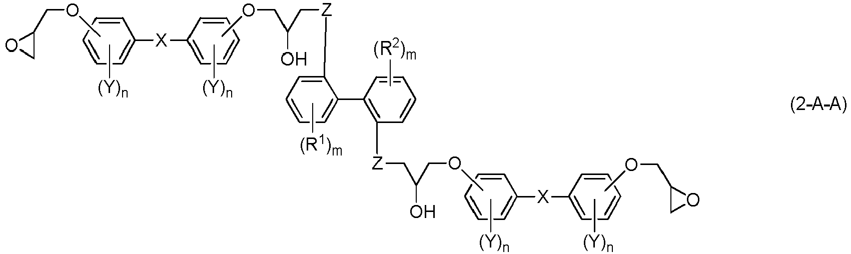

In Formula (2-A-A), definitions and preferred examples of X, Y, n, m, R¹, R² and Z are the same as the definitions and preferred examples of X, Y, n, m, R¹, R² and Z in Formula (1-A-A).

The epoxy compound represented by Formula (1-A-A) is more preferably an epoxy compound having a structure represented by at least one selected from the following Formulae (3-A-A) to (3-A-C) and Formulae (4-A-A) to (4-A-C).

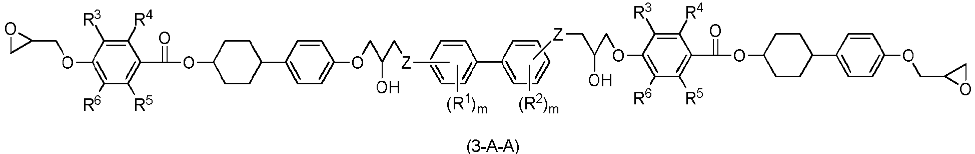

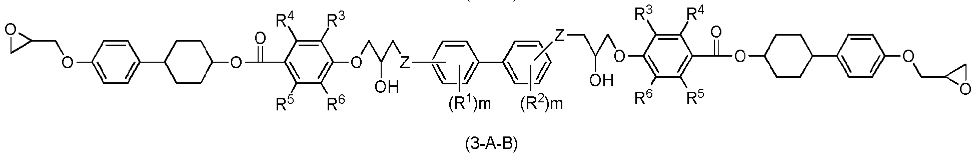

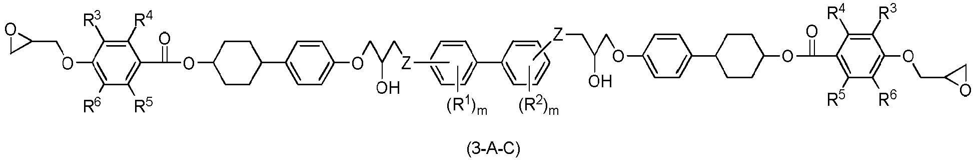

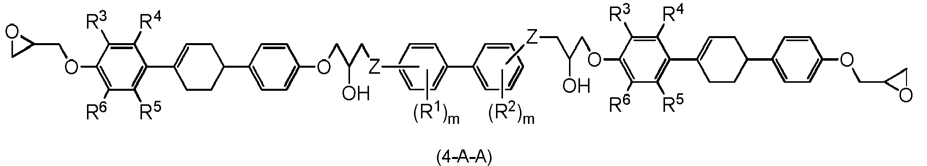

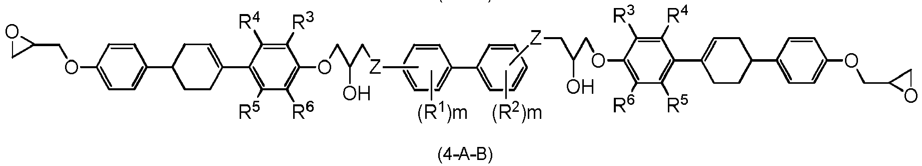

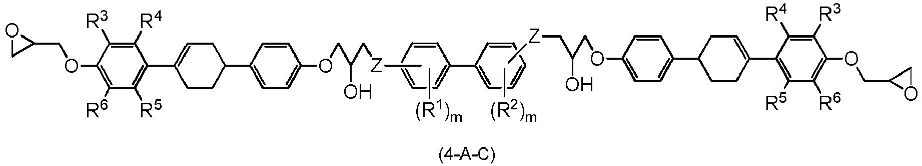

In Formulae (3-A-A) to (3-A-C) and Formulae (4-A-A) to (4-A-C), definitions and preferred examples of R³ to R⁶, R¹, R², m and Z are the same as the definitions and preferred examples of R³ to R⁶, R¹, R², m and Z in Formulae (3-A), (3-B), (4-A) and (4-B).

From the viewpoint of imparting flexibility to the molecular structure of specific epoxy compound 1 represented by the Formula above, it is preferred that at least one of Z is at an ortho position with respect to the carbon atom that contributes to the bonding of the aromatic rings that form the divalent biphenyl group; and it is more preferred that both of Z are at an ortho position with respect to the carbon atom that contributes to the bonding of the aromatic rings that form the divalent biphenyl group (i.e., in a state represented by the following Formulae (3-A-a) to (3-A-c) and Formulae (4-A-a) to (4-A-c)).

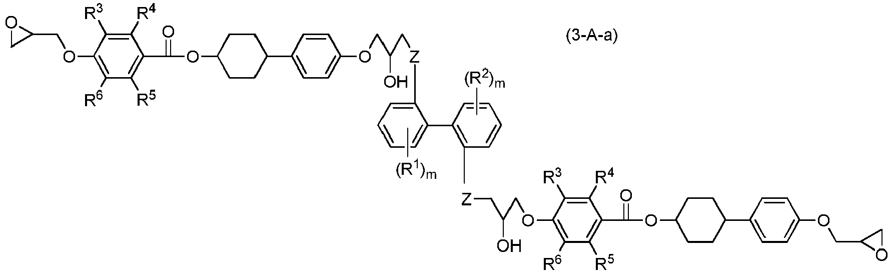

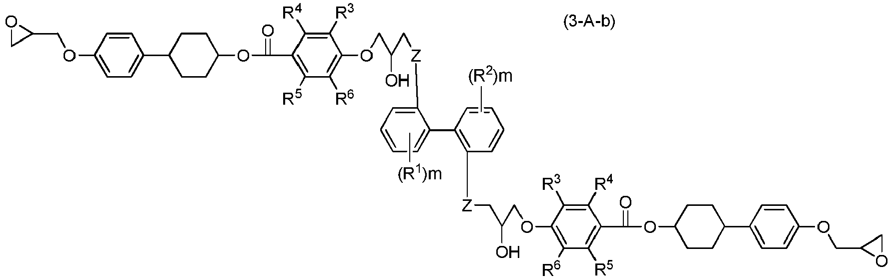

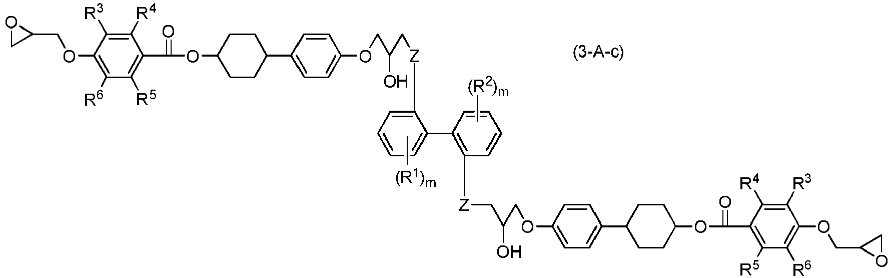

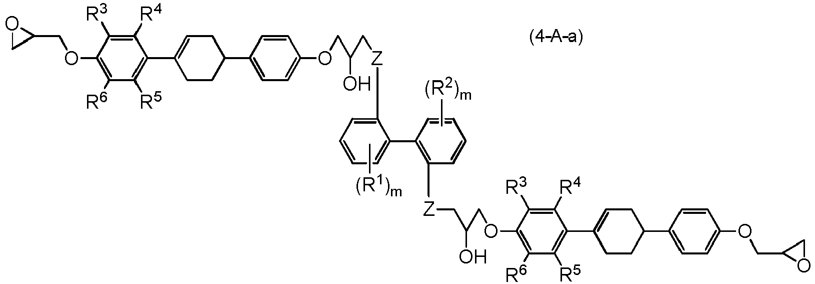

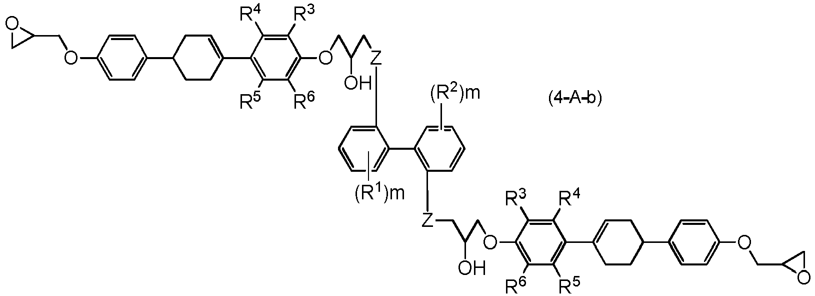

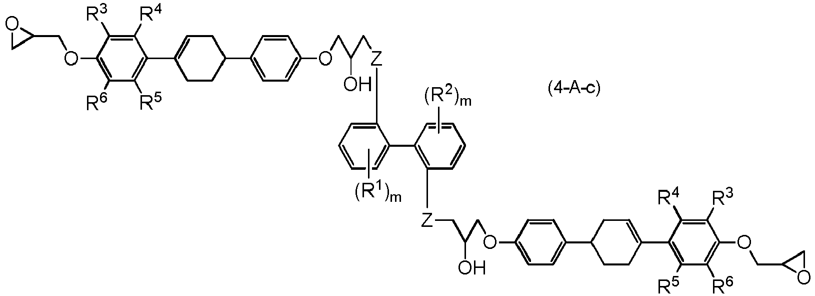

In Formulae (3-A-a) to (3-A-c) and Formulae (4-A-a) to (4-A-c), definitions and preferred examples of R¹, R², R³ to R⁶, m and Z are the same as the definitions and preferred examples of R¹, R², R³ to R⁶, m and Z in Formulae (3-A-A) to (3-A-C) and Formulae (4-A-A) to (4-A-C).

### <Epoxy resin (second type, not part of the claimed invention)>

The second type of epoxy resin (not part of the claimed invention) of the disclosure is an epoxy resin that includes an epoxy compound, the epoxy compound having a phenylene group and two mesogenic structures that are bonded to the phenylene group, at an angle with each other. Hereinafter, the epoxy compound is also referred to as a specific epoxy compound 2.

In the disclosure, the state "the mesogenic structures are bonded to the phenylene group at an angle with each other" refers to a state in which the bonding site of one of the two mesogenic structure to the phenylene group is at an ortho position or a meta position with respect to the bonding site of the other mesogenic structure to the phenylene group.

In the disclosure, the configuration of the bonding of the mesogenic structures to the phenylene group is not particularly limited. For example, the atom that forms the mesogenic structure may be directly bonded to the phenylene group, or the atom may be indirectly bonded to the phenylene group via a linking group.

In the disclosure, the mesogenic structure may include a phenylene group. In that case, the phenylene group included in the mesogenic structure is not regarded as the phenylene group as described above.

The inventors have found that a cured product obtained from an epoxy resin including an epoxy compound as described above exhibits improved bending elastic modulus, as compared with an epoxy resin including an epoxy compound that has a molecular structure in which the mesogenic structures and the phenyelne group are bonded in a linear manner. The reason for this is not exactly clear, but it is presumably because of the flexed molecular structure of the epoxy compound, formed by the mesogenic structures being bonded to the phenylene group at an angle with each other, which affects the stacking property of the molecule and contributes to the improvement in bending elastic modulus.

### (Phenylene group)

Specific examples of the phenylene group included in the specific epoxy compound 2 include the structures represented by the following Formulae (PH1) and (PH2).

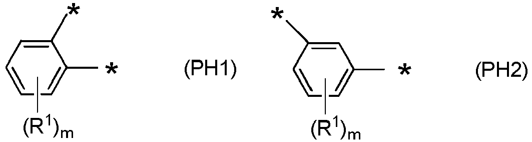

In Formulae (PH1) and (PH2), * refers to a bonding site to an adjacent atom. Each R¹ independently represents an alkyl group having 1 to 8 carbon atoms. Each m represents an integer from 0 to 4.

Each R¹ independently preferably represents an alkyl group having 1 to 3 carbon atoms, more preferably a methyl group.

Each m independently preferably represents an integer from 0 to 2, more preferably 0 or 1, further preferably 0.

The details and preferred embodiments of the mesogenic structures in specific epoxy compound 2 are the same as the details and preferred embodiments of the mesogenic structures in specific epoxy compound 1.

Specific epoxy compound 2 may be an epoxy compound having a structure represented by the following Formula (1-C).

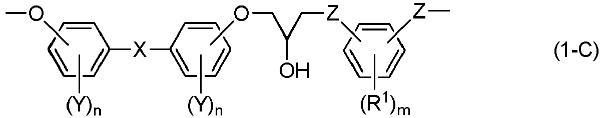

In Formula (1-C), definitions and preferred examples of X, Y and n are the same as the definitions and preferred examples of X, Y and n in Formula (1). The definitions and preferred examples of R¹ and m are the same as the definitions and preferred examples of R¹ and m in Formulae (PH1) and (PH2). Each of Z independently represents -O- or -NH-, and the bonding site of one of Z to the phenylene group is at an ortho position or at a meta position with respect to the bonding site of the other Z to the phenylene group.

When specific epoxy compound 2 is a dimer compound, examples thereof include a compound having a structure represented by the following Formula (1-A-C).

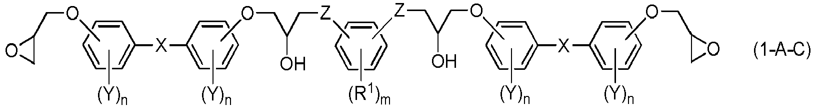

In Formula (1-A-C), definitions and preferred examples of X, Y, n, m, R¹ and Z are the same as the definitions and preferred examples of X, Y, n, m, R¹ and Z in Formula (1-C).

### (Method of synthesizing specific epoxy compound)

The method of synthesizing specific epoxy compound 1 or specific epoxy compound 2 (hereinafter, also collectively referred to as "specific epoxy compound") is not particularly limited. For example, the specific epoxy compound may be obtained by allowing a compound represented by the following Formula (1-m), hereinafter also referred to as a mesogenic epoxy monomer, to react with a biphenyl compound or a phenol compound having a functional group that can react with the epoxy group of the mesogenic epoxy monomer.

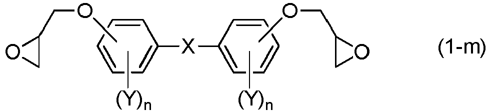

In Formula (1-m), definitions and preferred examples of X, Y and n are the same as the definitions and preferred examples of X, Y and n in the mesogenic structure of the specific epoxy compound represented by Formula (1).

From the viewpoint of forming a higher-order structure, the mesogenic epoxy monomer represented by Formula (1-m) is preferably a mesogenic epoxy monomer having a structure represented by the following Formula (2-m).

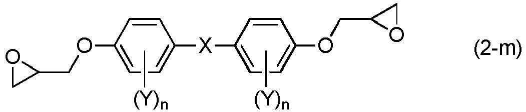

In Formula (2-m), definitions and preferred examples of X, Y and n are the same as the definitions and preferred examples of X, Y and n in Formula (1-m).

The mesogenic epoxy monomer represented by Formula (1-m) is more preferably a mesogenic epoxy monomer having a structure represented by the following Formula (3-m) or Formula (4-m).

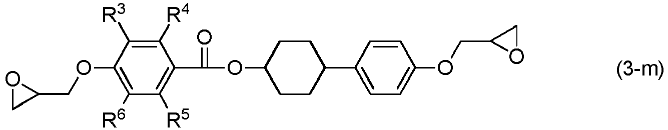

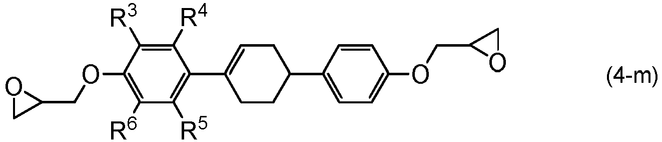

In Formula (3-m) and Formula (4-m), definitions and preferred examples of R³ to R⁶ are the same as the definitions and preferred examples of R³ to R⁶ in Formula (3) and Formula (4).

The method of reacting a mesogenic epoxy monomer and a biphenyl compound or a phenol compound having a functional group that can react with an epoxy group of the mesogenic epoxy monomer is not specifically limited. Specifically, for example, the reaction can be performed by dissolving a mesogenic epoxy monomer and a biphenyl compound or a phenol compound having a functional group that can react with an epoxy group of the mesogenic epoxy monomer, and optionally a reaction catalyst, in a solvent, and stirring the same while heating.

Alternatively, for example, the specific epoxy compound may be synthesized by mixing a mesogenic epoxy monomer and a biphenyl compound or a phenol compound having a functional group that can react with an epoxy group of the mesogenic epoxy monomer, without using a solvent, and stirring the mixture while heating.

The solvent used for the synthesis is not particularly limited, as long as it can dissolve a mesogenic epoxy monomer and a biphenyl compound or a phenol compound having a functional group that is capable of reacting with an epoxy group of the mesogenic epoxy monomer, and can be heated to a temperature required to cause reaction of the compounds. Specific examples of the solvent include cyclohexanone, cyclopentanone, ethyl lactate, propyleneglycol monomethyl ether, N-methyl pyrrolidone, methyl cellosolve, ethyl cellosolve, and propyleneglycol monopropyl ether.

The amount of the solvent is not particularly limited, as long as a mesogenic epoxy monomer and a biphenyl compound or a phenol compound having a functional group that is capable of reacting with an epoxy group of the mesogenic epoxy monomer, and optionally a reaction catalyst, can be dissolved at a reaction temperature. Although the degree of solubility depends on the type of the raw materials, the solvent and the like, the viscosity of the solvent after the reaction tends to be in a preferred range when the solvent is used in an amount that adjusts an initial solid content concentration to be from 20% by mass to 60% by mass, for example.

The biphenyl compound having a functional group that is capable of reacting with an epoxy group of the mesogenic epoxy monomer is not particularly limited. From the viewpoint of forming a smectic structure in a cured product, the biphenyl compound is preferably at least one selected from the group consisting of a dihydroxybiphenyl compound, having a structure in which two hydroxy groups are bonded to each of the benzene rings that form a biphenyl structure, respectively; and a diaminobiphenyl compound, having a structure in which two amino groups are bonded to each of the benzene rings that form a biphenyl structure, respectively (hereinafter, also referred to as specific biphenyl compounds).

Examples of the dihydroxybiphenyl compound include 2,2'-dihydroxybiphenyl, 2,3'-dihydroxybiphenyl, 2,4'-dihydroxybiphenyl, 3,3'-dihydroxybiphenyl, 3,4'-dihydroxybiphenyl and derivatives thereof.

Examples of the diaminobiphenyl compound include 2,2'-diaminobiphenyl, 2,3'-diaminoibiphenyl, 2,4'-diaminobiphenyl, 3,3'-diaminobiphenyl, 3,4'-diaminobiphenyl and derivatives thereof.

Derivatives of the specific biphenyl compound include a specific biphenyl compound having a substitute, such as an alkyl group of from 1 to 8 carbon atoms, on the benzene ring. A single kind of the specific biphenyl compound may be used alone, or two or more kinds may be used in combination.

From the viewpoint of improving the storage elasticity of a cured product, the specific biphenyl compound is preferably 2,2'-dihydroxybiphenyl or 2,2'-diaminobiphenyl. Since these compounds have hydroxy groups or amino groups at an ortho position on a benzene ring, a specific epoxy compound obtained by reacting these compounds is less likely to have a linear structure. As a result, it is easier to impart flexibility to the molecular structure.

The phenol compound having a functional group that is capable of reacting with an epoxy group of the mesogenic epoxy monomer is not particularly limited. From the viewpoint of forming a smectic structure in a cured product, the phenol compound is preferably a dihydroxybenzene compound, having a structure in which two hydroxy groups are bonded to the benzene rings at an ortho position or a meta position; and a diaminobenzene compound, having a structure in which two hydroxy groups are bonded to the benzene rings at an ortho position or a meta position (hereinafter, also referred to as specific phenol compounds).

Examples of the dihydroxybenzene compound include 1,2-dihydroxybenzene, 1,3-dihydroxybenzene and derivatives thereof.

Examples of the diaminobenzene compound include 1,2-diaminobenzene, 1,3-diaminobenzene and derivatives thereof.

Derivatives of the specific phenol compound include a specific phenol compound having a substitute, such as an alkyl group of from 1 to 8 carbon atoms, on the benzene ring. A single kind of the specific phenol compound may be used alone, or two or more kinds may be used in combination.

The type of the reaction catalyst is not particularly limited, and may be selected based on the reaction rate, reaction temperate, storage stability and the like. Specific examples of the reaction catalyst include an imidazole compound, an organic phosphorous compound, a tertiary amine compound and a quaternary ammonium salt. A single kind of the reaction catalyst may be used alone, or two or more kinds may be used in combination.

From the viewpoint of thermal resistance of a cured product, the reaction catalyst is preferably an organic phosphorous compound.

Preferred examples of the organic phosphorous compound include an organic phosphine compound; a compound having intermolecular polarization obtained by adding, to an organic phosphine compound, a compound having a π bond such as a maleic acid anhydride, a quinone compound, diazodiphenyl methane or a phenol resin; and a complex formed by an organic phosphine compound and an organic boron compound.

Specific examples of the organic phosphine compound include triphenylphosphine, diphenyl(p-tolyl)phosphine, tris(alkylphenyl)phosphine, tris(alkoxyphenyl)phosphine, tris(alkylalkoxyphenyl)phosphine, tris(dialkylphenyl)phosphine, tris(trialkylphenyl)phosphine, tris(tetraalkylphenyl)phosphine, tris(dialkoxyphenyl)phosphine, tris(trialkoxyphenyl)phosphine, tris(tetraalkoxyphenyl)phosphine, trialkylphosphine, dialkylarylphosphine and alkyldiarylphosphine.

Specific examples of the quinone compound include 1,4-benzoquinone, 2,5-toluquinone, 1,4-naphthoquinone, 2,3-dimethylbenzoquinone, 2,6-dimethylbenzoquinone, 2,3-dimethoxy-5-methyl-1,4-benzoquinone, 2,3-dimethoxy-1,4-benzoquinone, and phenyl-1,4-benzoquinone.

Specific examples of the organic boron compound include tetraphenyl borate, tetra-p-tolyl borate and tetra-n-butyl borate.

The amount of the reaction catalyst is not particularly limited. From the viewpoint of reaction rate and storage stability, the amount of the reaction catalyst is preferably from 1.0 parts by mass to 4.0 parts by mass, more preferably from 1.3 parts by mass to 3.0 parts by mass, with respect to 100 parts by mass of the total amount of the mesogenic epoxy monomer and the biphenyl compound or the phenol compound having a functional group that is capable of reacting with an epoxy group of the mesogenic epoxy monomer.

In a case of synthesizing a specific epoxy compound by using a mesogenic epoxy monomer, the total of the mesogenic epoxy monomer may react to form a specific epoxy compound, or the mesogenic epoxy monomer may partly remain in an unreacted state. From the viewpoint of thermal resistance as described later, the mesogenic epoxy monomer preferably partly remains in an unreacted state.

The specific epoxy compound can be synthesized by using a reaction container, such as a flask in a small scale or a reaction cauldron in a large scale. A specific example of the synthesis method is described below.

A mesogenic epoxy monomer is placed in a reaction container and a solvent is added as necessary, and the epoxy monomer is dissolved by heating the reaction container to a reaction temperature with an oil bath or a heating medium. Then, a biphenyl compound or a phenol compound having a functional group that is capable of reacting with an epoxy group of the mesogenic epoxy monomer is added thereto. After dissolving the compound in the solvent, a reaction catalyst is added as necessary, thereby starting the reaction. Subsequently, the solvent is removed under reduced pressure as necessary, whereby a specific epoxy compound is obtained.

The reaction temperature is not particularly limited, as long as the reaction of a mesogenic epoxy group and a functional group that is capable of reacting with an epoxy group can proceed. For example, the reaction temperature is preferably in a range of from 100 °C to 180 °C, more preferably from 100 °C to 150 °C. When the reaction temperature is 100 °C or higher, the time for completing the reaction tends to be shortened. When the reaction temperature is 180 °C or less, possibility of causing gelation tends to be reduced.

The ratio of the mesogenic epoxy monomer to the biphenyl compound or the phenol compound having a functional group that is capable of reacting with an epoxy group of the mesogenic epoxy monomer is not particularly limited. For example, the ratio may be adjusted to satisfy a ratio of the number of equivalent of epoxy group (A) to the number of equivalent of the functional group that is capable of reacting with an epoxy group (B), represented by A:B, of from 10:0.01 to 10:10. From the viewpoint of fracture toughness and heat resistance of a cured product, the range of A:B is preferably from 10:001 to 10:5.

From the viewpoint of bending elastic modulus of an epoxy resin cured product, the range of A:B is preferably from 10:1.6 to 10:5.0, more preferably from 10:1.8 to 10:3.0, further preferably from 10:2.0 to 10:2.8.

The structure of the specific epoxy compound can be determined by, for example, matching a molecular weight of the specific epoxy compound, which is presumed to be obtained by the reaction of the mesogenic epoxy monomer and the biphenyl compound or the phenol compound having a functional group that is capable of reacting with an epoxy group of the mesogenic epoxy monomer, with a molecular weight of a target compound obtained by liquid chromatography that is performed by a liquid chromatograph having a UV spectrum detector and a mass spectrum detector.

The liquid chromatography is performed by a gradient method using a column for analysis (for example, LaChrom II C16 from Hitachi, Ltd.) while continuously changing the mixture ratio (by volume) of the eluent in the order of acetonitrile/tetrahydrofuran/10 mmol/l aqueous ammonium acetate solution = 20/5/75, acetonitrile/tetrahydrofuran = 80/20 (20 min from the start) and acetonitrile/tetrahydrofuran = 50/50 (35 min from the start) at a flow rate of 1.0 ml/min. The UV spectrum detector detects an absorbance at a wavelength of 280 nm and the mass spectrum detector detects an ionization voltage as 2700 V.

From the viewpoint of bending elastic modulus of an epoxy resin cured product, the content of the specific epoxy compound is preferably 40% by mass or more, more preferably 45% by mass or more, further preferably 50% by mass or more, with respect to the total epoxy resin. From the viewpoint of heat resistance, the content of the specific epoxy compound is preferably 80% by mass or less, more preferably 75% by mass or less, further preferably 70% by mass or less, with respect to the total epoxy resin.

When the epoxy resin includes a dimer compound as a specific epoxy compound, the content thereof is not particularly limited. From the viewpoint of bending elastic modulus of an epoxy resin cured product, the content of the dimer compound is preferably 10% by mass or more, more preferably 15% by mass or more, further preferably 20% by mass or more, with respect to the total epoxy resin. From the viewpoint of heat resistance, the content of the dimer compound is preferably 60% by mass or less, more preferably 55% by mass or less, further preferably 50% by mass or less, with respect to the total epoxy resin.

The weight-average molecular weight (Mw) of the epoxy resin is not particularly limited. From the viewpoint of bending elastic modulus, the weight-average molecular weight (Mw) of the epoxy resin is preferably within a range of from 800 to 2000.

In the disclosure, the number-average molecular weight (Mn) and the weight-average molecular weight (Mw) of the epoxy resin is measured by liquid chromatography.

The liquid chromatography is performed at a sample concentration of 0.5% by mass and a flow rate of 1.0 ml/min, using tetrahydrofuran as a mobile phase. A calibration curve is obtained by using a polystyrene standard sample, and the Mn and Mw (polystyrene-based) are calculated.

The measurement can be performed by using a high performance liquid chromatograph (for example, L6000 from Hitachi, Ltd.) and a data analyzer (for example, C-R4A from Shimadzu Corporation) with GPC columns (for example, G2000HXL and G3000 HXL from Tosoh Corporation).

The epoxy equivalent amount of the epoxy resin is not particularly limited. From the viewpoint of achieving both fluidity of the epoxy resin and thermal conductivity of a cured product thereof, the epoxy equivalent amount is preferably from 245 g/eq to 500 g/eq, more preferably from 250 g/eq to 450 g/eq, further preferably from 260 g/eq to 400 g/eq.

When the epoxy equivalent amount of the epoxy resin is 245 g/eq or more, crystallinity of the epoxy resin is not too high and the fluidity is less likely to be lowered. When the epoxy equivalent amount of the epoxy resin is 400 g/eq or less, the crosslinking density of the epoxy resin is not too low and a high degree of thermal conductivity of a product tends to be achieved. In the disclosure, the epoxy equivalent amount of the epoxy resin is measured by perchloric acid titration.

### <Epoxy resin composition>

The epoxy resin composition of the disclosure includes an epoxy resin of the present invention as described above and a curing agent.

### (Curing agent)

The type of the curing agent included in the epoxy resin composition is not particularly limited, as long as it can cause a curing reaction with an epoxy resin. Specific examples of the curing agent include an amine curing agent, a phenol curing agent, an acid anhydride curing agent, a polymercaptan curing agent, a polyaminoamide curing agent, an isocyanate curing agent, and a block isocyanate curing agent. A single kind of the curing agent may be used alone, or two or more kinds may be used in combination.

From the viewpoint of forming a higher-order structure in a cured product of the epoxy resin composition, a curing agent is preferably an amine curing agent or a phenol curing agent, more preferably an amine curing agent, further preferably an amine compound having at least two amino groups that are directly bonded to an aromatic ring.

Specific examples of the amine curing agent include 3,3'-diaminodiphenylsulfone, 4,4'-diaminodiphenylsulfone, 4,4'-diaminodiphenylmethane, 4,4'-diaminodiphenylether, 4,4'-diamino-3,3'-dimethoxybiphenyl, 4,4'-diaminophenylbenzoate, 1,5-diaminonaphthalene, 1,3-diaminonaphthalene, 1,4-diaminonaphthalene, 1,8-diaminonaphthalene, 1,3-diaminobenzene, 1,4-diaminobenzene, 4,4'-diaminobenzanilide, and trimethylene-bis-4-aminobenzoate.

From the viewpoint of forming a smectic structure in a cured product of the epoxy resin composition, the curing agent is preferably 4,4'-diaminodiphenylsulfone, 1,3-diaminobenzene, 1,4-diaminobenzene, 4,4'-diaminobenzanilide, 1,5-diaminonaphthalene, 4,4'-diaminodiphenylmethane or trimethylene-bis-4-aminobenzoate. From the viewpoint of obtaining a cured product with high glass transition temperature, the curing agent is more preferably 4,4'-diaminobenzanilide.

Examples of the phenol curing agent include a low-molecular phenol compound and a phenol novolac resin, which is obtained by linking low-molecular phenol compounds with a methylene group or the like. Examples of the low-molecular phenol compound include a monofunctional phenol compound, such as phenol, o-cresol, m-cresol and p-cresol; a difunctional phenol compound, such as catechol, resorcinol and hydroquinone; and a trifunctional phenol compound such as 1,2,3-trihydroxybenzene, 1,2,4-trihydroxybenzene and 1,3,5-trihydroxybenzene.

The amount of the curing agent in the epoxy resin composition is not particularly limited. From the viewpoint of efficiency of curing reaction, the amount of the curing agent preferably satisfies a ratio of equivalent amount A of the active hydrogen atom (amine equivalent) of the curing agent in the epoxy resin composition with respect to equivalent amount B of the epoxy group (epoxy equivalent) of the epoxy resin (A/B) of from 0.3 to 3.0, more preferably from 0.5 to 2.0.

### (Other components)

The epoxy resin composition may include components other than the epoxy resin and the curing agent. For example, the epoxy resin composition may include a curing catalyst, a filler or the like. Specific examples of the curing catalyst include the compounds as described above as a reaction catalyst used for the synthesis of the specific epoxy compound.

### (Use application)

The use application of the epoxy resin composition is not particularly limited. For example, the epoxy resin composition can be suitably used for a processing method that requires low viscosity and excellent fluidity. For example, the epoxy resin composition may be used for a process of producing FRPs (Fiber-Reinforced Plastics), in which fibers are impregnated with an epoxy resin composition while heating, or a process of producing a sheet-like product in which an epoxy resin composition is spread with a squeegee or the like while heating.

The epoxy resin composition is also suitably used for a method in which a solvent is desirably not added or reduced in order to suppress formation of voids in a cured product (such as production of FRPs used for aeroplanes or spaceships).

### <Epoxy resin composition cured product and composite material>

The epoxy resin cured product of the disclosure is obtained by curing the epoxy resin composition as described above. The composite material of the disclosure includes the epoxy resin cured product and a reinforcing material.

Specific examples of the reinforcing material include carbon material, glass, aromatic polyamide resins such as Kevlar (registered trade name), ultra high molecular weight polyethylene, alumina, boron nitride, aluminum nitride, mica and silicon. The form of the reinforcing material is not particularly limited, and examples thereof include fibers and particles (filler). The composite material may include a single kind of reinforcing material alone, or may include two or more kinds in combination.

### [Examples]

In the following, the invention is explained by referring to the Examples. However, the invention is not limited to these Examples.

### <Example 1>

To a 500-mL three-necked flask, 50 parts by mass of epoxy monomer A (4-{4-(2,3-epoxypropoxy)phenyl} cyclohexyl=4-(2,3 -epoxypropoxy)benzoate, following structure) were placed as a specific epoxy monomer, and 100 parts by mass of propyleneglycol monomethyl ether were added. A cooling tube and a nitrogen inlet tube were attached to the flask, and a stirring blade was attached so as to be immersed in the solvent. Then, the flask was immersed in an oil bath at 150 °C and subjected to stirring.

After confirming that epoxy monomer A was dissolved and the solution became clear, 2,2'-dihydroxybiphenyl (22BP) was added as a specific biphenyl compound, such that the ratio of the equivalent amount of epoxy group of epoxy monomer A (A) to the equivalent amount of hydroxy group of 2,2'-dihydroxybiphenyl (A:B) was 10:2.5, and 0.5 g of triphenylphosphine were added as a reaction catalyst. The heating of the mixture was continued in an oil bath at 150 °C for 3 hours. Thereafter, propyleneglycol monomethyl ether was evaporated under reduced pressure, and the residue was cooled to room temperature (25 °C). An epoxy resin, in which a part of epoxy monomer A is reacted with 2,2'-dihydroxybiphenyl to form a multimer (specific epoxy compound), was thus obtained.

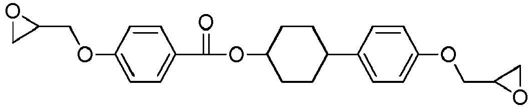

Subsequently, 50 g of the epoxy resin and 9.4 g of 3,3'-diaminodiphenylsulfone as a curing agent were placed in a stainless dish, and heated on a hot plate at 180 °C. After the resin in the stainless dish was melted, the heating was continued at 180 °C for 1 hour. After cooling to room temperature (25 °C), the resin was taken out from the stainless dish and heated in a thermostat chamber at 230 °C for 1 hour to complete the curing, thereby obtaining an epoxy resin cured product. A sample for evaluation of fracture toughness, having a size of 2 mm x 0.5 mm x 40 mm, and a sample for evaluation of bending elastic modulus, having a size of 50 mm x 5 mm x 2 mm, were prepared from the epoxy resin cured product.

### <Reference Example 2>

An epoxy resin cured product was prepared in the same manner to Example 1, except that 1,3-benzenediol (RS) was used instead of 2,2'-dihydroxybiphenyl, such that the ratio of the equivalent amount of epoxy group of epoxy monomer A (A) to the equivalent amount of hydroxy group of 1,3-benzenediol (B) (A:B) was 10:2.5, and samples for evaluation were prepared in the same manner to Example 1.

### <Reference Example 3>

An epoxy resin cured product was prepared in the same manner to Example 1, except that epoxy monomer B (following structure) was used instead of epoxy monomer A and 1,3-benzenediol (RS) was used instead of 2,2'-dihydroxybiphenyl, such that the ratio of the equivalent amount of epoxy group of epoxy monomer B (A) to the equivalent amount of hydroxy group of 1,3-benzenediol (B) (A:B) was 10:0.5, and samples for evaluation were prepared in the same manner to Example 1.

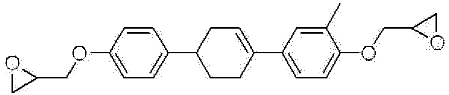

### <Comparative Example 1>

An epoxy resin cured product was prepared in the same manner to Example 1, except that 4,4'-dihydroxybiphenyl (44BP) was used instead of 2,2'-dihydroxybiphenyl, such that the ratio of the equivalent amount of epoxy group of epoxy monomer A (A) to the equivalent amount of hydroxy group of 4,4'-dihydroxybiphenyl (B) (A:B) was 10:2.5, and samples for evaluation were prepared in the same manner to Example 1.

### <Comparative Example 2>

An epoxy resin cured product was prepared in the same manner to Example 1, except that 1,4-benzenediol (HQ) was used instead of 2,2'-dihydroxybiphenyl, such that the ratio of the equivalent amount of epoxy group of epoxy monomer A (A) to the equivalent amount of hydroxy group of 1,4-benzenediol (B) (A:B) was 10:2.5, and samples for evaluation were prepared in the same manner to Example 1.

### <Comparative Example 3>

An epoxy resin cured product was prepared in the same manner to Reference Example 3, except that 1,4-benzenediol (HQ) was used instead of 1,3-benzenediol, such that the ratio of the equivalent amount of epoxy group of epoxy monomer B (A) to the equivalent amount of hydroxy group of 1,4-benzenediol (B) (A:B) was 10:0.5, and samples for evaluation were prepared in the same manner to Example 1.

### [Measurement of bending elastic modulus]

As an index for the bending elastic modulus of the epoxy resin cured product, the bending elastic modulus (GPa) of the sample was calculated from the result of three-point bending test based on ASTM D790, using a tester (Instron 5948, Instron) with a support point distance of 32 mm and a test speed of 1 mm/min. The results are shown in Table 1.

### [Measurement of fracture toughness]

As an index for the fracture toughness of the epoxy resin cured product, the fracture toughness (MPa·m^{1/2}) of the sample was calculated from the result of three-point bending test based on ASTM D5045, using a tester (Instron 5948, Instron). The results are shown in Table 1.

### [Existence or non-existence of smectic structure]

In order to determine whether or not a smectic structure is formed in the epoxy resin cured product, an X-ray diffraction measurement was performed using CuKα 1 line, under a tube voltage of 40 kV, a tube current of 20 mA, a scan rate of 0.03°/min and a measurement range 2θ = 2° to 30° using an X-ray diffractometer (Rigaku Corporation). The existence or non-existence of a smectic structure was determined by the following criteria. The results are shown in Table 1.

YES: diffraction peak is observed in a range of 2θ = 2° to 10°, and a smectic structure is formed.

NO: diffraction peak is not observed in a range of 2θ = 2° to 10°, and a smectic structure is not formed.

| | Monomer | Phenol/biphenyl compound | Equivalent ratio [A:B] | Bending elastic modulus [GPa] | Fracture toughness [MPa·m^{1/2}] | Formation of smectic structure |
|---|---|---|---|---|---|---|
| Example 1 | A | 22BP | 10:2.5 | 3.0 | 1.88 | YES |
| Reference Example 2 | A | RS | 10:2.5 | 2.9 | 1.22 | YES |
| Reference Example 3 | B | RS | 10:0.5 | 2.8 | 1.35 | YES |
| Comparative Example 1 | A | 44BP | 10:2.5 | 2.5 | 1.91 | YES |
| Comparative Example 2 | A | HQ | 10:2.5 | 2.4 | 1.31 | YES |
| Comparative Example 3 | B | HQ | 10:0.5 | 2.3 | 1.34 | YES |

As shown in Table 1, the epoxy resin cured products of the Example and Reference Examples, including a specific epoxy compound obtained by reaction of a specific epoxy monomer with 2,2'-dihydroxybiphenyl or 1,3-benzenediol, exhibited superior bending elastic modulus as compared with the epoxy resin cured product of Comparative Example 1, including an epoxy compound obtained by reaction of a specific epoxy monomer with 4,4'-dihydroxybiphenyl. Although the epoxy resin cured products of the Example and Reference Examples exhibited lower fracture toughness, it was still sufficient for practical use. The epoxy resin cured products of Comparative Examples 2 and 3, including an epoxy compound obtained by reaction of a specific epoxy monomer with 1,4'-benzenediol, exhibited lower fracture toughness and lower bending elastic modulus than the epoxy resin cured products of the Example and Reference Examples.

## Claims

1. An epoxy resin, comprising an epoxy compound, the epoxy compound having two aromatic rings that form a divalent biphenyl structure and mesogenic structures that are bonded to each of the two aromatic rings, and at least one of bonding sites of the aromatic ring to the mesogenic structure being at an ortho position or a meta position with respect to a carbon atom that bonds the aromatic rings.

2. The epoxy resin according to claim 1, wherein at least one of the mesogenic structures is represented by the following Formula (3) or Formula (4): 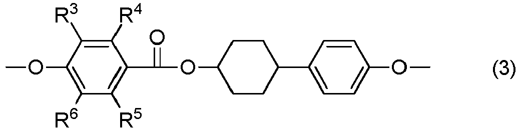 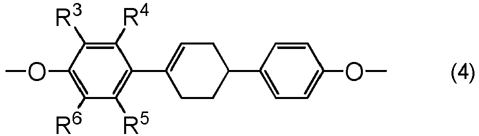 wherein, in Formula (3) and Formula (4), each of R³ to R⁶ independently represents a hydrogen atom or an alkyl group having 1 to 3 carbon atoms.

3. The epoxy resin according to claim 1, wherein the epoxy compound includes an epoxy compound having at least one structure selected from the group consisting of the following Formula (3-A), Formula (3-B), Formula (4-A) and Formula (4-B): 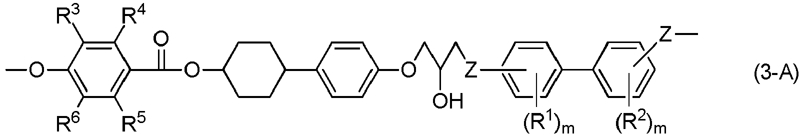 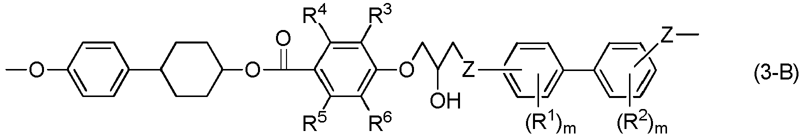 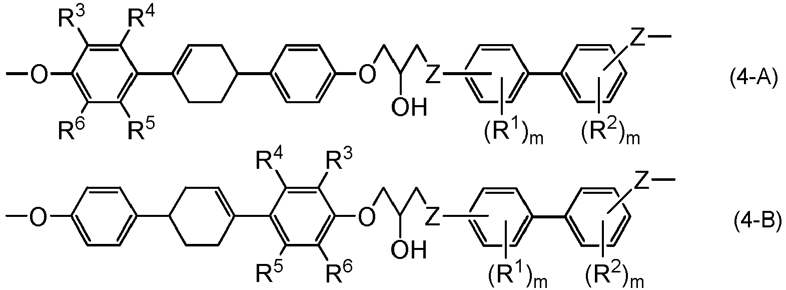 wherein, in Formula (3-A), Formula (3-B), Formula (4-A) and Formula (4-B), each of R¹ and R² independently represents an alkyl group having 1 to 8 carbon atoms, each m independently represents an integer from 0 to 4, each of R³ to R⁶ independently represents a hydrogen atom or an alkyl group having 1 to 3 carbon atoms, each Z independently represents -O- or -NH-, and at least one Z is bonded to the aromatic ring that forms the divalent biphenyl structure at an angle with a molecular axis of the divalent biphenyl structure.

4. An epoxy resin composition, comprising the epoxy resin according to any one of claim 1 to claim 3 and a curing agent.

5. The epoxy resin composition according to claim 4, being configured to form a smectic structure in a cured state.

6. An epoxy resin cured product, comprising a cured product of the epoxy resin composition according to claim 4 or claim 5.

7. A reinforcing material, comprising the epoxy resin cured product according to claim 6 and a reinforcing material.

## Patentansprüche

1. Epoxidharz, umfassend eine Epoxyverbindung, wobei die Epoxyverbindung zwei aromatische Ringe, die eine zweiwertige Biphenylstruktur bilden, und mesogene Strukturen, die an jeden der zwei aromatischen Ringe gebunden sind, aufweist, und wobei mindestens eine der Bindungsstellen des aromatische Rings an die mesogene Struktur eine ortho-Position oder eine meta-Position in Bezug auf ein Kohlenstoffatom, das die aromatischen Ringe verbindet, ist.

2. Epoxidharz gemäß Anspruch 1, wobei mindestens eine der mesogenen Strukturen durch die folgende Formel (3) oder Formel (4) dargestellt ist: 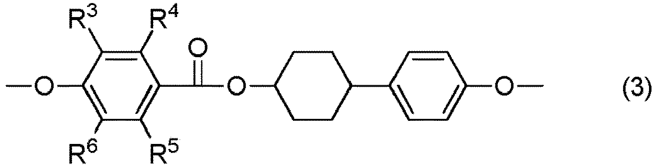 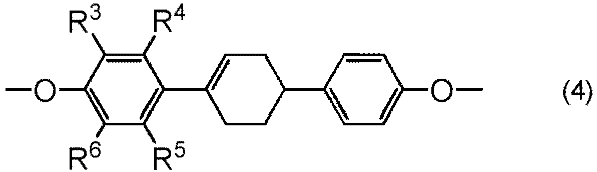 wobei in Formel (3) und Formel (4) jedes von R³ bis R⁶ unabhängig ein Wasserstoffatom oder eine Alkylgruppe mit 1 bis 3 Kohlenstoffatome darstellt.

3. Epoxidharz gemäß Anspruch 1, wobei die Epoxyverbindung eine Epoxyverbindung mit mindestens einer Struktur, ausgewählt aus der Gruppe, bestehend aus der folgenden Formel (3-A), Formel (3-B), Formel (4-A) und Formel (4-B), einschließt: 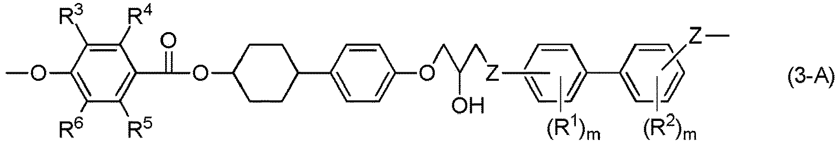 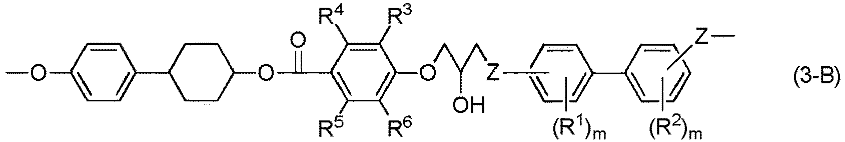 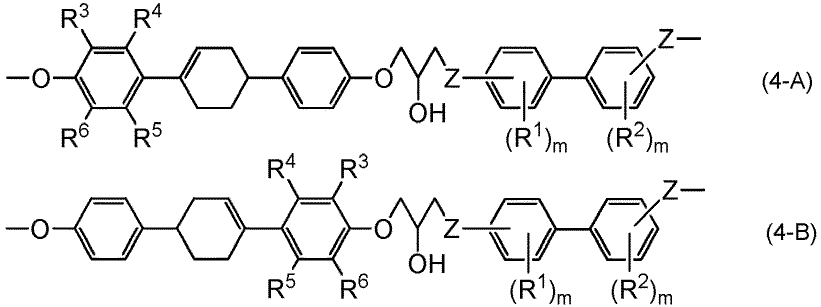 wobei in Formel (3-A), Formel (3-B), Formel (4-A) und Formel (4-B) jedes von R¹ und R² unabhängig eine Alkylgruppe mit 1 bis 8 Kohlenstoffatomen darstellt, jedes m unabhängig eine ganze Zahl von 0 bis 4 darstellt, jedes von R³ bis R⁶ unabhängig ein Wasserstoffatom oder eine Alkylgruppe mit 1 bis 3 Kohlenstoffatomen darstellt, jedes Z unabhängig -O- oder -NH- darstellt und mindestens ein Z an den aromatischen Ring, der die zweiwertige Biphenylstruktur bildet, in einem Winkel mit der Molekülachse der zweiwertigen Biphenylstruktur gebunden ist.

4. Epoxidharzzusammensetzung, umfassend das Epoxidharz gemäß einem der Ansprüche 1 bis 3 und ein Härtungsmittel.

5. Epoxidharzzusammensetzung gemäß Anspruch 4, die so konfiguriert ist, dass sie in einem gehärteten Zustand eine smektische Struktur bildet.

6. Gehärtetes Epoxidharzprodukt, umfassend ein gehärtetes Produkt aus der Epoxidharzzusammensetzung gemäß Anspruch 4 oder Anspruch 5.

7. Verstärkungsmaterial, umfassend das gehärtete Epoxidharzprodukt gemäß Anspruch 6 und ein Verstärkungsmaterial.

## Revendications

1. Résine époxyde, comprenant un composé époxyde, le composé époxyde présentant deux cycles aromatiques qui forment une structure biphényle divalente et des structures mésogènes qui sont liées à chacun des deux cycles aromatiques, et au moins une position parmi des sites de liaison du cycle aromatique à la structure mésogène qui se trouve à une position ortho ou une position méta par rapport à un atome de carbone qui lie les cycles aromatiques.

2. Résine époxy selon la revendication 1, dans laquelle au moins une des structures mésogènes est représentée par la formule (3) ou (4) suivante : 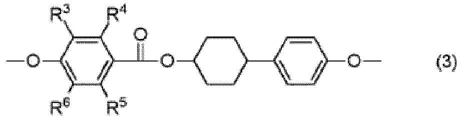 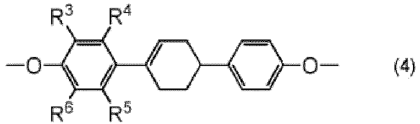 dans laquelle, dans la formule (3) et la formule (4), chacun de R³ à R⁶ représente indépendamment un atome d'hydrogène ou un groupe alkyle présentant 1 à 3 atomes de carbone.

3. Résine époxyde selon la revendication 1, dans laquelle le composé époxyde comporte un composé époxyde présentant au moins une structure choisie dans le groupe constitué par la formule (3-A), la formule (3-B), la formule (4-A) et la formule (4-B) ci-dessous : 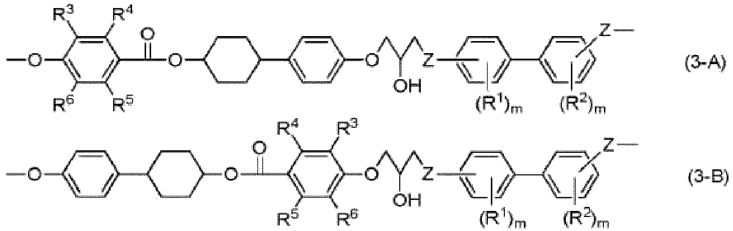 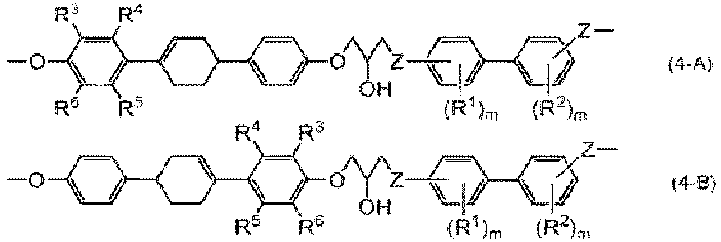 dans laquelle, dans la formule (3-A), la formule (3-B), la formule (4-A) et la formule (4-B), chacun de R¹ et R² représente indépendamment un groupe alkyle présentant 1 à 8 atomes de carbone, chaque m représente indépendamment un nombre entier de 0 à 4, chacun de R³ à R⁶ représente indépendamment un atome d'hydrogène ou un groupe alkyle qui présente 1 à 3 atomes de carbone, chaque Z représente indépendamment -O- ou -NH-, et au moins un Z est lié au cycle aromatique qui forme la structure biphényle divalente à un angle avec un axe moléculaire de la structure biphényle divalente.

4. Composition de résine époxy, comprenant la résine époxy selon une quelconque des revendications 1 à 3 et un agent de durcissement.

5. Composition de résine selon la revendication 4, qui est configurée pour former une structure smectique dans un état durci.

6. Produit durci de résine époxy, comprenant un produit durci de composition de résine époxy selon la revendication 4 ou la revendication 5.

7. Matériau de renforcement, comprenant le produit durci de résine époxy selon la revendication 6 et un matériau de renforcement.
